# EUROPÄISCHE PATENTSCHRIFT

(11) **EP 3 486 129 B1**
(45) Veröffentlichungstag und Bekanntmachung des Hinweises auf die Patenterteilung: **13.05.2020**
(21) Anmeldenummer: 18206692.8
(22) Anmeldetag: 16.11.2018
(51) Int. Cl.: B60S 9/06, B60S 9/08

(54) **STÜTZE**
SUPPORT
SUPPORT

(30) Priorität: 16.11.2017 DE 102017126998
(43) Veröffentlichungstag der Anmeldung: 22.05.2019
(73) Patentinhaber: SAF-HOLLAND GmbH, 63856 Bessenbach (DE)
(72) Erfinder: Riedl, Reinhold, 14089 Berlin (DE)
(74) Vertreter: Müller Schupfner & Partner Patent- und Rechtsanwaltspartnerschaft mbB

(56) Entgegenhaltungen:
- EP-A1- 2 163 444
- EP-A2- 1 878 629

## Beschreibung

Die Erfindung bezieht sich auf eine höhenverstellbare Stütze für einen Sattelauflieger oder Anhänger.

Die EP 1 878 629 A offenbart eine Stütze gemäß dem Oberbegriff des unabhängigen Anspruchs 1.

Derartige Stützen sind aus dem Stand der Technik bekannt. Die Stützen sind dabei bevorzugt paarweise vorn an Sattelaufliegern angebracht. Sie können aus- oder eingefahren, d.h. in Abstütz- oder Transportstellung verstellt und auch zum Anheben des vorderen Sattelaufliegerbereichs benutzt werden. Wenn an abgestellten Sattelaufliegern beispielsweise durch Luftverlust der Achsfederungen in Längsrichtung oder bei Be- oder Entladevorgängen auch seitlicher Schub erfolgt, haben die Stützen zusätzlich zur Vertikalbelastung auch Querkräfte aufzunehmen. Es treten dadurch Biegebeanspruchung der Stütze auf, welche zu einer Verbiegen der Spindel führen kann. Diese Verbiegung der Spindel bedingt dabei eine Einschränkung der Benutzbarkeit und kann unter Umständen sogar zum Versagen der Stütze führen.

Der Erfindung liegt die Aufgabe zugrunde, eine höhenverstellbare Stütze für Sattelauflieger vorzuschlagen, bei der eine Spindelbiegung reduziert oder vermieden wird.

Diese Aufgabe wird durch eine Stütze mit den Merkmalen des Anspruchs 1 gelöst. Weitere vorteilhafte Ausführungsformen ergeben sich aus den Unteransprüchen. Erfindungsgemäß umfasst eine Stütze, insbesondere für einen Sattelauflieger, ein Stützenaußenrohr, mit einer darin angeordneten Tragplatte und einem entlang einer Längsachse verstellbarem Stützeninnenrohr, wobei das Stützeninnenrohr mit einer Spindelmutter verbunden ist, die mit einem Gewindeteil einer Spindel in Eingriff steht oder bringbar ist, wobei die Spindel über einen, vorzugsweise mit einer Handkurbel anzutreibenden, Getriebebereich antreibbar ist, wobei der Getriebebereich ein Kegelradsatz aufweist, welcher ein Tellerrad umfasst, das einen Nabenbereich aufweist, wobei der Nabenbereich dazu ausgelegt ist, ein Drehmoment um die Längsachse auf die Spindel zu übertragen, wobei die Spindel durch ein Loch der Tragplatte geführt ist, und durch die Tragplatte gelagert ist, wobei die Lagerung der Spindel in der Tragplatte schwimmend ausgebildet ist. Das Stützenaußenrohr ist dazu ausgelegt, wie ein Gehäuse für die darin angeordnete Tragplatte und das ebenfalls darin angeordnete Stützeninnenrohr zu fungieren. Das Stützenaußenrohr verfügt insbesondere über einen Montagebereich, mittels welchem die Stütze an einem weiteren Element wie zum Beispiel einem Sattelauflieger oder einem Trailer angeordnet werden kann, wobei der Montagebereich beispielsweise durch eine Anschraubplatte gebildet sein kann. Das Stützenaußenrohr weist insbesondere sowohl einen äußeren Querschnitt als auch inneren Querschnitt auf, welcher rechteckig ist. Hierdurch kann eine besonders einfache Fertigung des Stützenaußenrohrs erreicht werden, sodass Kosten gespart werden können. Die Längsachse ist die Achse, in welche sich insbesondere die Länge der Stütze bestimmt. Bevorzugt ist die Längsachse auch die idealisierte Rotationsachse der Spindel. Vorteilhafterweise ist die Längsachse in einem idealisierten eingebauten Zustand parallel zu dem Vektor der Erdbeschleunigung gerichtet. Unter idealisiert ist dabei in diesem Zusammenhang zu verstehen, dass dieser theoretisch idealisierte Zustand dadurch charakterisiert ist, dass keine ungewollt auftretenden Querkräfte oder Verbiegungen vorhanden sind, welche belastungsbedingt im Betrieb auftreten können. Das Stützeninnenrohr ist dabei derart im Stützenaußenrohr gelagert, dass dieses durch eine Verlagerung in Einfahrrichtung entlang der Längsachse in das Stützenaußenrohr eingefahren werden kann, sodass das Ende, welches dem Stützenaußenrohr distal gegenüberliegend ist, nicht abstützend mit dem Boden in Kontakt steht. Entgegen der Einfahrrichtung ist entlang der Längsachse die Ausfahrrichtung orientiert, sodass das Stützeninnenrohrs durch eine Verlagerung entlang der Ausfahrrichtung abstützend mit dem Boden in Kontakt gebracht werden kann. Bevorzugt weist das Stützeninnenrohr zum Abstützen - an seinem dem Stützenaußenrohr distal gegenüberliegenden Ende - einen Fuß auf. Um die Verlagerung des Stützeninnenrohrs relativ zum Stützenaußenrohr entlang der Einfahr- bzw. der Ausfahrrichtung zu realisieren, ist innerhalb des Stützeninnenrohrs und innerhalb des Stützenaußenrohrs ein Spindelantrieb vorhanden, welcher eine Spindel und eine Spindelmutter umfasst. Die Spindelmutter ist dabei, insbesondere zerstörungsfrei lösbar, mit dem Stützeninnenrohr verbunden. Das zerstörungsfreie Verbinden kann insbesondere durch eine Schraubverbindung erreicht werden. Die Spindel des Spindelantriebs ist dabei drehmomenttechnisch mit einem Getriebebereich verbunden, durch welchen die Spindel mittel- oder unmittelbar in Rotation um die Längsachse bzw. die Spindelachse angetrieben werden kann. Der Getriebebereich selber wird dabei vorzugsweise durch eine Handkurbel angetrieben. Der Getriebebereich verfügt zumindest über einen Kegelradsatz und unter Umständen über mehrere weitere Stirnrad- und/oder Kegelradpaarungen und/oder ein Planetengetriebesatz bzw. ein Umlaufgetriebe. Vorteilhafterweise ist zumindest eine dieser Getriebestufen schaltbar ausgestaltet. Dieser zumindest eine Kegelradsatz ist dabei vorteilhafterweise die letzte Getriebestufe des Getriebebereichs, daher die Getriebestufe, welche in der Drehmomentkette dem Übertragen des Drehmoments auf die Spindel am nächsten kommt. Dieser Kegelradsatz verfügt über ein Tellerrad, welches einen Nabenbereich aufweist, der dazu ausgelegt ist, ein Drehmoment um die Längsachse auf die Spindel zu übertragen. Hierzu ist das Tellerrad insbesondere derart innerhalb des Stützenaußenrohrs angeordnet, dass dieses um die Längsachse rotiertbar gelagert ist. Der Nabenbereich ist dabei derjenige Bereich des Tellerrads, welcher für die Drehmomentübertragung auf die Spindel zuständig ist. Bevorzugt kann der Nabenbereich zum Beispiel durch ein Gewinde, eine Passfedernut oder durch eine Polygonverbindung gebildet sein. Besonders bevorzugt ist es, wenn diese Drehmomentübertragung zwischen dem Nabenbereich und der Spindel dabei formschlüssig erfolgt, da hierdurch auch hochdynamisch schwankende Drehmomente sicher übertragen werden können. Die Spindel ist dabei derart innerhalb des Stützenaußenrohrs angeordnet, dass diese durch ein Loch der Tragplatte geführt ist und durch diese Tragplatte gelagert ist. Diese Lagerung der Spindel innerhalb der Tragplatte erfolgt dabei schwimmend. Unter schwimmend ist in diesem Zusammenhang zu verstehen, dass die Spindel bevorzugt in radialer Richtung spielbehaftet innerhalb des Lochs der Tragplatte geführt ist. Die radiale Richtung ist eine, bevorzugt jegliche, Richtung, welche senkrecht auf der idealisierten Längsachse steht. Dies kann beispielsweise dadurch erreicht werden, dass zwischen dem Loch bzw. Rand des Lochs der Tragplatte und der Spindel ein Spalt vorgesehen ist. Der Spalt kann insbesondere durch einen Freiraum von mindestens zwei Millimetern, bevorzugt von mindestens 4 mm und besonders stark bevorzugt von mindestens 5 mm in radialer Richtung gebildet sein, sodass hier eine gewollte Lücke vorhanden ist und dass insbesondere eine Verlagerung der Spindel durch diesen Spalt ermöglicht wird. Alternativ oder zusätzlich bevorzugt ist es, wenn die schwimmende Lagerung der Spindel in der Tragplatte auch in Richtung der Längsachse spielbehaftet ist. Die Tragplatte ist dabei insbesondere stoff- und/oder formschlüssig innerhalb des Stützenaußenrohrs angeordnet. Durch die erfindungsgemäße Lagerung der Spindel in der Tragplatte wird ermöglicht, dass die Spindel bei einer Querbelastung dieser derart ausweichen kann, dass die Spindel nicht oder nur zu einem geringen Maß auf Biegung beansprucht wird, sodass eine, insbesondere plastische, Verformung der Spindel verhindert wird.

Zweckmäßigerweise weist der Nabenbereich einen Vorsprung auf, mittels welchem das Tellerrad in dem Loch der Tragplatte gelagert ist. Der Vorsprung ist dabei zweckmäßigerweise derart ausgestaltet, dass dieser in Richtung der Längsachse, insbesondere in Ausfahrrichtung, hervorspringt. Vorteilhafterweise ist der Vorsprung derart ausgestaltet, dass dieser sich zwischen der Spindel und dem Loch erstreckt. In anderen Worten kann der Vorsprung derart gestaltet sein, dass dieser die Spindel innerhalb des Lochs zumindest teilweise umgibt. Zweckmäßigerweise weist der Vorsprung dabei eine zumindest bereichsweise vorhandene Rotationssymmetrie um die Längsachse auf. Der Vorsprung selber kann dabei ein- oder mehrstückig mit dem Tellerrad ausgebildet sein, unter Umständen kann der Vorsprung daher auch aus einer Vielzahl von Elementen bestehen. Einstückig bedeutet in diesem Zusammenhang, dass kein stoffschlüssiges Fügen einzelner Bauteile benötigt wird. Bevorzugt ist es, wenn der Vorsprung derart vom Tellerrand vorspringt, dass dieser in das Loch der Tragplatte ragt. Unter Ragen kann dabei unter anderem verstanden werden, dass der Vorsprung das Loch zumindest teilweise, bevorzugt zumindest zum überwiegenden Teil, in Richtung der Längsachse durchdringt. Durch diese Art der Anordnung des Vorsprungs innerhalb des Loches der Tragplatte kann erreicht werden, dass das Tellerrad formschlüssig gegenüber einer Verlagerung in radialer Richtung gesichert ist. Insbesondere bevorzugt kann zwischen dem Loch bzw. Rand des Lochs der Tragplatte und dem Nabenbereich bzw. Vorsprung ein Spalt vorgesehen sein. Der Spalt kann insbesondere durch einen Freiraum von mindestens zwei Millimetern in radialer Richtung gebildet sein, sodass hier eine gewollte Lücke vorhanden ist und dass insbesondere eine Verlagerung der Spindel durch diesen Spalt ermöglicht wird.

Bevorzugt ist in dem Loch der Tragplatte ein Gleitlager angeordnet, an welchem der Vorsprung abstützend anlegbar ist. Durch den Einsatz des Gleitlagers kann eine Reibungsreduktion zwischen dem rotierbar gelagerten Tellerrad und der nicht rotierbar gelagerten Tragplatte erreicht werden. Das Gleitlager ist dabei bevorzugt als eine Hülse ausgebildet, welche in dem Loch der Tragplatte angeordnet ist. Das Gleitlager dient daher insbesondere dazu, in radialer Richtung das Tellerrad relativ zur Tragplatte abzustützen. Bevorzugt weist das Gleitlager einen Kragen auf, welcher sich in radialer Richtung erstreckt und durch den das Tellerrad auch in Ausfahrrichtung gegenüber der Tragplatte abgestützt werden kann.

Vorteilhafterweise weist der Nabenbereich eine Durchgangsöffnung auf, durch welche die Spindel führbar ist. Durch das Vorsehen dieser Durchgangsöffnung kann in einfacher Weise eine kompakte Bauweise der Angliederung des Tellerrads an die Spindel erfolgen. Die Durchgangsöffnung kann eine polygonförmige oder rechteckige Querschnittsform aufweisen. Bevorzugt ist die Querschnittsform jedoch bereichsweise insbesondere vollständig rund. Hierdurch kann eine besonders einfache Fertigung erreicht werden. Die Durchgangsöffnung erstreckt sich dabei vollständig durch den Nabenbereich des Tellerrades in Richtung der Längsachse. Besonders bevorzugt ist es, um eine einfache Fertigung zu erreichen, wenn die Durchgangsöffnung einen konstanten Querschnitt entlang der Erstreckungsrichtung, insbesondere entlang der idealisierten Längsachse, aufweist. Der Durchmesser bestimmt sich dabei unabhängig von der geometrischen Form des Querschnitts dadurch, dass dieser der Durchmesser des kleinstmöglichen Kreises ist, welcher den Querschnitt in dieser Ebene umschließen kann. Durchführbar oder durchgeführt bedeutet dabei, dass die Spindel sich zumindest in einen Abschnitt der Durchgangsöffnung erstreckt oder erstecken könnte und von der Durchgangsöffnung umgeben ist oder sein kann.

Bevorzugt ist das Ende der Spindel, welches durch die Durchgangsöffnung geführt ist, als ein Spindelzapfen ausgebildet, welcher einen anderen Durchmesser aufweist als der Gewindeteil der Spindel. Der Gewindeteil der Spindel ist dabei der Teil, welcher ein Gewinde, insbesondere ein Trapez- oder Sägegewinde, aufweist. Der andere Durchmesser kann dabei sowohl durch eine Vergrößerung als auch durch eine Verkleinerung erreicht werden. Bevorzugt ist der Durchmesser des Spindelzapfens kleiner als der Durchmesser des Gewindeteils. Hierdurch kann erreicht werden, dass dieser Durchmesserübergang als Anlagefläche genutzt werden kann. Es ist dabei möglich, dass zwischen dem Spindelzapfen und dem Gewindeteil der Spindel ein Zwischenabschnitt vorgesehen ist, welcher einen anderen Durchmesser als der Spindelzapfen und der Gewindeteil aufweist. Bevorzugt ist der Durchmesser dieses Abschnitts dabei größer als der Durchmesser des Spindelzapfens und des Gewindeteils. Der Spindelzapfen verfügt zweckmäßigerweise über einen konstanten Durchmesser entlang der Längsachse, sodass eine einfache Fertigung erreicht werden kann. Der Spindelzapfen bildet daher dasjenige Ende der Spindel aus, welches durch das Loch geführt ist. Der Spindelzapfen kann über Montageabschnitte verfügen, welche dazu dienen, eine axiale Verlagerbarkeit der Spindel in Ausfahrrichtung zu begrenzen oder zu behindern. Die Montageabschnitte können unter anderem durch Löcher oder durch ein Gewinde gebildet sein. Diese Montageabschnitte sind dabei für die Bestimmung des konstanten Durchmessers entlang der Längsachse nicht maßgeblich, sodass diese, wenn die sonstigen Bereiche des Spindelzapfens einen konstanten Durchmesser aufweisen, die Konstantheit nicht zerstören können. Bevorzugt ist auch der Bereich der Spindel, welcher durch die Durchgangsöffnung des Tellerrads geführt ist, Teil des Spindelzapfens.

Zweckmäßigerweise besteht zwischen der Durchgangsöffnung des Tellerrads und dem Spindelzapfen ein Ringspalt. Dieser Ringspalt ist dabei ein ringförmiger Spalt in radialer Richtung zwischen der Durchgangsöffnung des Tellerrads und dem Spindelzapfen der Spindel. Unter Ringspalt ist insbesondere ein ringförmiger Spalt zu verstehen, bei dem die Differenz zwischen Innendurchmesser und Außendurchmesser mindestens 2 mm beträgt. Durch diesen Ringspalt - zwischen Durchgangsöffnung und Spindelzapfen - kann in einfacher und Bauraum sparenden Weise eine radiale schwimmende Lagerung der Spindel erreicht werden. Wichtig dabei ist, dass die Spindel relativ zum Tellerrad verlagerbar ist, sodass das Tellerrad potenziell weiterhin auch fest, insbesondere relativ zur Tragplatte, gelagert sein kann.

Zweckmäßigerweise weist das Tellerrad einen länglichen Durchbruch auf, der schlitzartig durch den Nabenbereich verläuft, wobei die Flanken des Durchbruchs mit zumindest einem Übertragungsmittel in Eingriff stehen oder bringbar sind, sodass ein antreibendes Drehmoment von dem Tellerrad auf die Spindel formschlüssig übertragbar ist. Der längliche Durchbruch erstreckt sich in Richtung der Längsachse, wobei dieser das Tellerrad bevorzugt zum überwiegenden Teil und besonders bevorzugt vollständig durchdringt. Der längliche Durchbruch ist dabei schlitzartig durch den Nabenbereich auszuführen. Schlitzartig bedeutet dabei in diesem Zusammenhang, dass der Durchbruch zumindest zwei parallel zueinander orientierte ebene Flanken aufweist, welche dabei bevorzugt eine Länge in radialer Richtung aufweist, die größer ist als der Abstand der beiden Flanken zueinander. Diese beiden Flanken des Durchbruchs dienen dabei dazu, dass diese mit einem oder mehreren Übertragungsmitteln derart formschlüssig in Eingriff stehen oder bringbar sind, dass ein Drehmoment formschlüssig zwischen dem Tellerrad und der Spindel übertragen werden kann. Die Übertragungsmittel können dabei in kostengünstiger Weise durch Passfedern, Scheibenfedern, Einlegekeile oder Treibkeile gebildet sein. Bevorzugt ist der Durchbruch für sich betrachtet - ohne den Einfluss einer möglicherweise vorhandenen Durchgangsöffnung - dabei derart ausgestaltet, dass der Querschnitt ein Parallelogramm oder ein Rechteck ist, sodass eine einfache und somit kostengünstige Fertigung möglich ist. Besonders bevorzugt weist der Durchbruch dabei einen Durchmesser bzw. eine derart gestaltete radiale Abmessung auf, dass die Übertragungsmittel in radialer Richtung formschlüssig durch den Durchbruch gehalten sind. In anderen Worten bedeutet dies, dass das zumindest eine Übertragungsmittel derart innerhalb des Durchbruchs gehalten sein kann, dass dieses keine für die Demontage des Übertragungsmittels benötigte Verlagerung in radialer Richtung ausführen kann, da eine solche durch die umgebenden Wände oder Flanken des Durchbruchs verhindert wird. Dies bedeutet insbesondere, dass der Querschnitt des Durchbruchs derart gestaltet ist, dass dieser das Übertragungsmittel umschließt bzw. umgibt. Zum Erleichtern einer einfachen Demontage ist es besonders zweckmäßig, wenn der Durchbruch derart gestaltet ist, dass dieser von der in Ausfahrrichtung distal begrenzenden Fläche in Richtung der Längsachse Übertragungsmittel umgebend ausgestaltet ist. Bevorzugt ist jedoch der Durchbruch entlang der Längsachse vollständig Übertragungsmittel umgebend ausgebildet. Die Fixierung des Tellerrades in Richtung der Einfahrrichtung wird dabei durch das Getriebeelement, mit welchem das Tellerrad in Kontakt steht, erreicht, sodass kein "Verlieren" des Tellerrades in Richtung der Längsachse befürchtet werden muss.

In einer bevorzugten Ausführungsform ist das Übertragungsmittel ein Trag-Mitnahmestift, welcher sich quer durch den Spindelzapfen erstreckt. Der Trag-Mitnahmestift erstreckt sich dabei quer zu der Spindel und durchdring diese bevorzugt vollständig, sodass der Trag-Mitnahmestift mit zwei distal gegenüberliegenden Bereichen formschlüssig mit den Flanken des Durchbruchs in Eingriff stehen kann, und so ein Drehmoment übertragbar ist. Unter "quer erstrecken" ist in diesem Zusammenhang zu verstehen, dass die Erstreckungsachse des Trag-Mitnahmestifts einen Winkel von ± 25° mit der Längsachse bzw. der Spindelachse bilden darf. Besonders bevorzugt erstreckt sich der Stift jedoch senkrecht zu der Spindelachse bzw. der Längsachse. Der Stift selber kann dabei insbesondere als Stift mit konstantem Querschnitt ausgebildet sein, sodass ein besonders kostengünstiger Trag-Mitnahmestift resultiert. Alternativ bevorzugt kann es sich bei dem Trag-Mitnahmestift auch um einen Kerbstift oder um einen Kegelstift handeln, wodurch eine Verlagerbarkeit desselbigen in radialer Richtung bzw. in Stifterstreckungsrichtung erschwert bzw. verhindert wird. Bevorzugt weist der Trag-Mitnahmestift dabei eine Länge in Stifterstreckungsrichtung auf, welche größer ist als der Durchmesser des Lochs in der Tragplatte. Hierdurch kann erreicht werden, dass sich der Trag-Mitnahmestift abstützend an der Tragplatte anlegen kann. In anderen Worten bedeutet dies, dass der Trag-Mitnahmestift insbesondere als eine Verliersicherung bzw. Anschlag bei einer Verlagerung der Spindel in Ausfahrrichtung relativ zur Tragplatte fungieren kann. Besonders bevorzugt ist es, wenn die Stütze im Abstützungszustand ist, dass zwischen dem Trag-Mitnahmestift und der nächstliegenden Abstützfläche der Tragplatte ein Spalt von mindestens 2 mm gebildet wird. Hierdurch kann in besonders einfacher und effektiver Weise eine schwimmende Lagerung der Spindel in der Tragplatte in Richtung der Längsachse erreicht werden.

Zweckmäßigerweise durchdringt der Durchbruch den Nabenbereich vollständig, sodass das Tellerrad relativ zur Spindel in Richtung der Längsachse verlagerbar ist. Durch dieses vollständige Durchdringen des Nabenbereichs wird erreicht, dass das Tellerrad in Richtung der Längsachs verlagerbar zu der Spindel ist.

Bevorzugt ist zwischen der Spindel und der Tragplatte ein Axiallager angeordnet, wobei das Axiallager Kräfte von der Spindel, insbesondere in Richtung der Längsachse, mittel- oder unmittelbar auf die Tragplatte übertragen kann. Das Axiallager dient daher dazu, Kräfte, insbesondere in Richtung der Längsachse, in die Tragplatte abzuleiten. Besonders bevorzugt ist es dabei, wenn das Axiallager derart beschaffen ist, dass dieses Kräfte von der Spindel in Richtung der Einfahrrichtung auf die Tragplatte überträgt. Dies ist insbesondere deshalb vorteilhaft, weil dadurch ein Ausfahren auch bei Anliegen von Stützkräften in Richtung der Längsachse durch das Axiallager aufgrund von Reibungsminimierung erleichtert wird. Das Axiallager selbst kann dabei sowohl als Gleitlager als auch bevorzugt als Wälzlager, insbesondere als axiales Wälzlager, ausgestaltet sein. Unter zwischenangeordnet ist zu verstehen, dass das Axiallager im Kraftfluss zwischen der Tragplatte und der Spindel angeordnet ist. Hierzu kann es zweckmäßig sein, wenn zwischen der Spindel und dem Axiallager eine Tragscheibe angeordnet ist, sodass die Flächenpressung an der Spindel und dem Axiallager entsprechend angepasst bzw. reduziert werden kann. Besonders bevorzugt ist diese Tragscheibe dabei bereichsweise bzw. vollständig durchgehärtet. Hierdurch kann die Standfestigkeit der Tragscheibe gesteigert werden.

Zweckmäßigerweise ist zwischen der Tragplatte und dem Axiallager eine Druckscheibe angeordnet. Diese Druckscheibe dient daher dazu, Kräfte von dem Axiallager auf die Tragplatte, insbesondere in Richtung der Längsachse, zu übertragen. Die Druckscheibe ist vorteilhafterweise aus einem Stahl gefertigt, sodass eine hohe Standfestigkeit der selbigen resultiert.

In einer bevorzugten Ausführungsform weist die Druckscheibe eine konvexe Fläche auf, welche mit der Tragplatte in Kontakt steht oder bringbar ist, wobei die konvexe Fläche bevorzugt sphärisch ausgebildet ist. In anderen Worten bedeutet dies, dass diese konvexe Fläche der Druckscheibe bevorzugt unmittelbar an der Tragplatte anliegt oder, insbesondere aufgrund eines Spiels, anlegbar ist. Durch die konvexe, insbesondere sphärische, Ausbildung der konvexen Fläche wird erreicht, dass eine Verdrehung der Spindel um eine radiale Richtung begünstig wird, sodass eine Verdrehung in derart stattfinden kann, dass die idealisierte Längsachse einen Winkel mit der nicht idealisierte Längsachse bilden kann, ohne dass die Lagerung der Spindel gegenüber der Tragplatte negativ beeinflusst wird.

Bevorzugt ist das Loch der Tragplatte bereichsweise aufgeweitet, insbesondere konisch und/oder sphärisch, ausgebildet, wobei der Durchmesser des aufgeweiteten, insbesondere konischen und/oder sphärischen, Bereichs zum Stützeninnenrohr hin zunimmt. Insbesondere bildet der aufgeweitete, insbesondere konische, Bereich dabei das Ende des Lochs in Richtung des Stützeninnenrohrs aus. In anderen Worten bedeutet dies, dass zumindest der Bereich des Loches, welcher das selbige in Ausfahrrichtung begrenzt, aufgeweitet, insbesondere konisch, ausgebildet ist. Durch dieses konische Ausbilden des Lochs wird eine Zentrierung der Spindel erreicht. Bevorzugt liegt der Winkel, welcher dieser konische Bereich mit der idealisierten Längsachse bildet, dabei in einem Bereich von 70° - 20°. Hierdurch wird erreicht, dass eine einfache Fertigung resultiert. Besonders bevorzugt liegt der Winkel in einem Bereich von 60° - 40°, wodurch erreicht werden kann, dass ein Einklemmen in das Loch verhindert wird.

In einer bevorzugten Ausführungsform ist der konische Bereich des Lochs dazu ausgelegt, mit der konvexen Fläche zu kontaktieren. Hierdurch wird erreicht, dass die verbiegungsunterstützende Wirkung der konvexen Fläche durch die zentrierende Wirkung des konischen Bereichs des Loches noch verstärkt wird, sodass der Widerstand gegen eine Verbiegung der Spindel relativ zu der Längsachse reduziert wird. In anderen Worten bedeutet dies, dass der konische Bereichs des Lochs zusammen mit der konvexen Fläche eine Art Kugelpfannengelenk bildet, welches zwar zur Abstützung in Einfahrrichtung dient, jedoch eine rotatorische Bewegung in alle drei Raumrichtungen zumindest in Bereichen zulässt oder nur einen geringen Widerstand entgegensetzt. Hierdurch können, insbesondere plastische, Verformungen von Bauteilen der Stütze verhindert werden.

Weitere Vorteile und Merkmale der vorliegenden Erfindung ergeben sich aus der nachfolgenden Beschreibung mit Bezug auf die Figuren. Einzelne Merkmale der dargestellten Ausführungsform können dabei auch in anderen Ausführungsformen eingesetzt werden, sofern dies nicht ausdrücklich ausgeschlossen wurde. Es zeigen:
- Figur 1: eine Außenansicht der erfindungsgemäßen ausgefahrenen Stütze;
- Figur 2: eine Schnittansicht der Stützte im nicht idealisierten Zustand;
- Figur 3: eine Detailansicht der Tellerradlagerung;
- Figur 4: eine Ausführungsform eines Tellerrads.

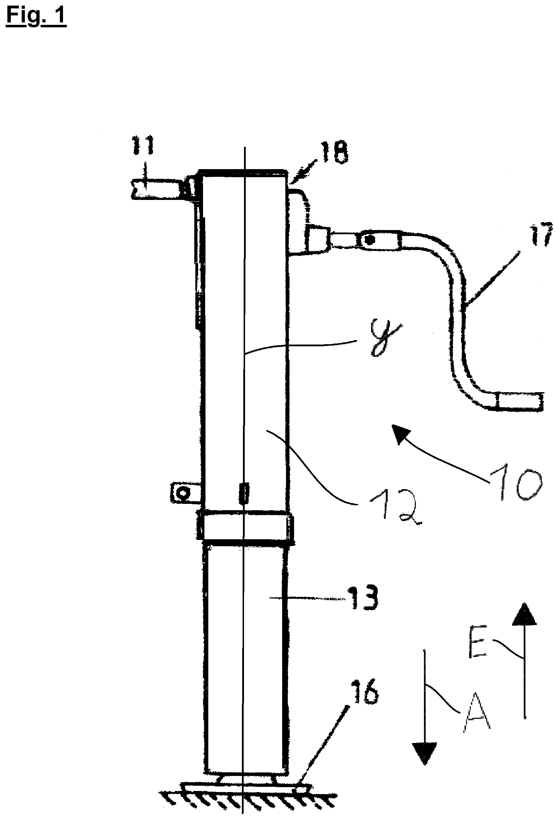

In der Figur 1 ist eine Seitenansicht einer erfindungsgemäßen Stütze im ausgefahrenen Zustand gezeigt. Die Stütze 10 umfasst dabei ein Stützenaußenrohr 12 und ein Stützeninnenrohr 13, wobei das Stützeninnenrohr 13 entlang der Längsachse y in Einfahrrichtung E und Ausfahrrichtung A in bzw. aus dem Stützenaußenrohr 12 ausgefahren werden kann. An dem dem Stützenaußenrohr 12 distal gegenüberliegenden Ende des Stützeninnenrohrs 13 ist ein Fuß 16 angeordnet, welcher in dem in der Figur 1 dargestellten Zustand mit dem Boden abstützend kontaktiert. In dem dem Stützeninnenrohr 13 abgewandten Teil des Stützenaußenrohrs 12 befindet sich der teilweise außenliegende Getriebebereich 18, welcher mittels der Handkurbel 17 angetrieben werden kann. Zur Verbindung mit einer weiteren Stütze verfügt die Stütze 10 über eine Verbindungswelle 11.

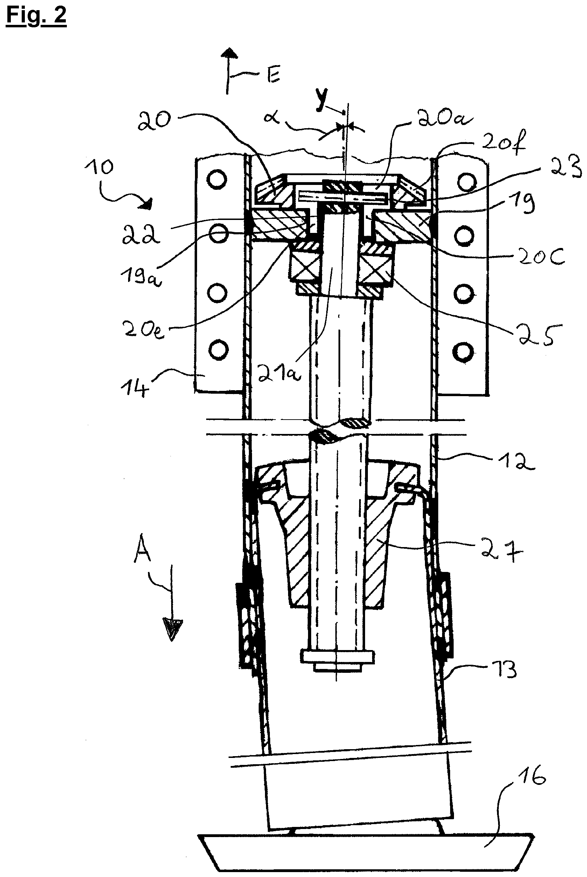

In der Figur 2 ist eine Schnittansicht einer erfindungsgemäßen Stütze 10 im nichtidealisierten Zustand dargestellt. Dieser nichtidealisierte Zustand ist dabei dadurch charakterisiert, dass insbesondere die Spindel 21 derart durch eine Querkraft oder ein Moment rotatorisch verformt ist, dass die nicht idealisierte Längsachse y bzw. die Spindelachse einen Verlagerungswinkel α mit der idealisierten Längsachse y bildet. In der dargestellten Ausführungsform ist das Tellerrad 20 zu erkennen, welches über die Verzahnung 20f mit einem nicht dargestellten Getriebepartner in Eingriff steht, sodass das Tellerrad 20 und dessen Nabenbereich 20a ein Drehmoment auf den Spindelzapfen 21a der Spindel 21 übertragen können. In der dargestellten Ausführungsform erfolgt dies formschlüssig über den Trag-Mitnahmestift 23, welcher innerhalb des Durchbruchs 20c umschließend angeordnet ist. Das Tellerrad 20 ist dabei in Ausfahrrichtung A abstützend an der oberen Fläche der Tragplatte 19 abgestützt, wobei der Vorsprung 20e in das Loch 19a der Tragplatte ragt. Zwischen dem Spindelzapfen 21a und dem Vorsprung 20e ist ein Ringspalt 22 vorhanden, welcher eine schwimmende Lagerung der Spindel 21 senkrecht zur Längsachse y ermöglicht. Die relative Verlagerbarkeit der Spindel 21 relativ zur Tragplatte 19 in Richtung der Spindelachse ist dabei zum einen durch den Trag-Mitnahmestift 23 in Ausfahrrichtung A begrenzt und in Einfahrrichtung E durch das Axiallager 25. Zur Montage weist die Stütze 10 eine Anschraubplatte 14 auf, welche über eine Vielzahl von Bohrungen verfügt. Zur Verlagerung des Stützeninnenrohrs 13 relativ zum Stützenaußenrohr 12 ist im unteren Bereich der Spindel 21 eine Spindelmutter 27 vorgesehen, welche in Eingriff mit dem Gewindebereich der Spindel 21 steht, sodass die Spindel 21 und die Mutter 27 als ein Spindelantrieb fungieren, welcher das Stützeninnenrohr 13 relativ zum Stützenaußenrohr 12 in Richtung der Einfahrrichtung E und in Richtung der Ausfahrrichtung A verlagern kann. Zum Abstützen an einem Boden verfügt das Stützeninnenrohr 13 an seinem unteren Ende über einen Fuß 16.

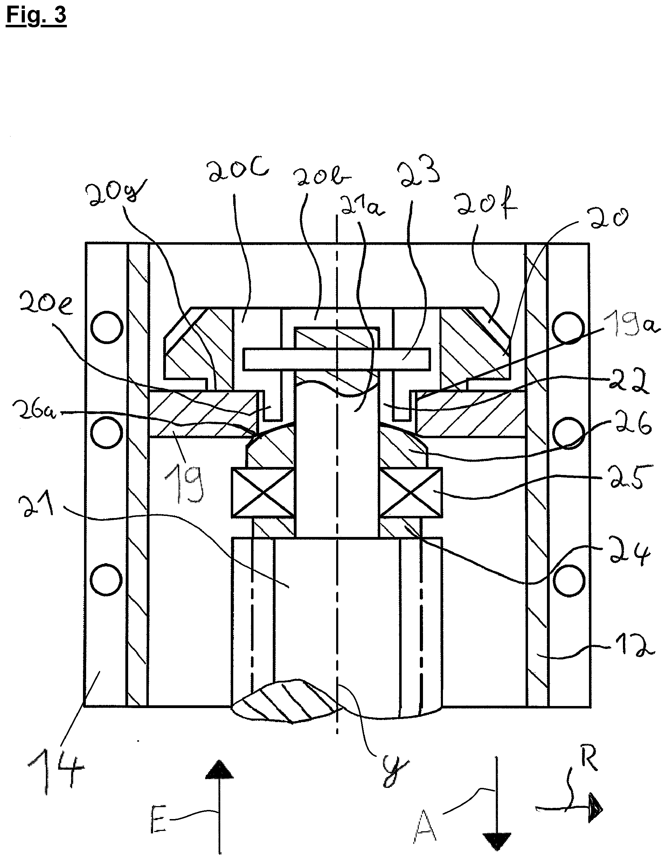

In der Figur 3 ist eine Detailansicht einer erfindungsgemäßen Tellerradlagerung bzw. Spindellagerung dargestellt. Die in der Figur 3 dargestellte Ausführungsform ist dabei sehr ähnlich zu der Ausführungsform, welche bereits in der Figur 2 dargestellt wurde. Das Tellerrad 20, welches über eine Verzahnung 20f verfügt, mittels der ein Drehmoment von einem nicht dargestellten Getriebeelement auf das Tellerrad 20 übertragen werden kann, stützt sich über den Stützenbereich 20g an der Tragplatte 19 ab. Um eine Verlagerung des Tellerrads 20 in radialer Richtung zu verhindern, verfügt dieses über einen Vorsprung 20e, welcher in die Bohrung 19a der Tragplatte hineinragt. Zwischen diesem Vorsprung 20e und dem Spindelzapfen 21a ist ein Ringspalt 22 vorhanden, welcher eine schwimmende Lagerung der Spindel 21 in der Tragplatte 19 ermöglicht. Der Spindelzapfen 21 ist in der dargestellten Ausführungsform zumindest bereichsweise durch Durchgangsöffnungen 20b des Tellerrads 20 geführt. Für die Drehmomentübertragung zwischen dem Tellerrad 20 und der Spindel 21 verfügt das Tellerrad 20 über einen Durchbruch 20c, an dessen Flanken der Trag-Mitnahmestift 23 angelegt werden kann. Der Trag-Mitnahmestift 23 erstreckt sich dabei senkrecht zu der idealisierten Längsachse y und ist innerhalb des Spindelzapfens 21a durch eine Öffnung geführt. Der Trag-Mitnahmestift 23 dient dabei zusätzlich auch als Anlage- bzw. Endanschluss der Spindel 21, wenn diese in Ausfahrrichtung A relativ zur Tragplatte 19 verlagert wird. Die Lagerung in Einfahrrichtung E wird durch die Lagerkombination um das Axiallager 25 herum gebildet. Diese Lagerkombination ist dabei durch eine Tragscheibe 24, das Axiallager 25 und eine Druckscheibe 26 gebildet, wobei die Druckscheibe 26 über eine sphärische Fläche 26a verfügt, welche unmittelbar mit der Tragplatte 19 kontaktiert oder kontaktieren kann.

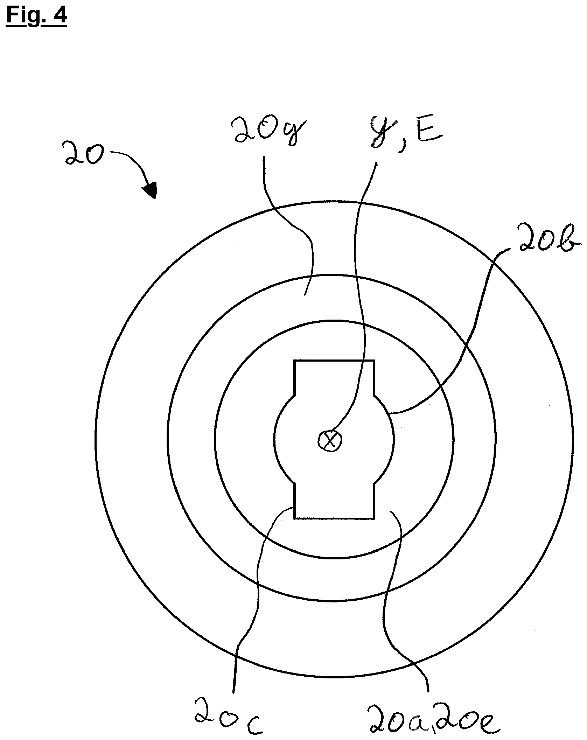

In der Figur 4 ist eine Ausführungsform des Tellerrads 20 dargestellt. Die Ansicht erfolgt dabei derart, dass diese in Richtung der Einfahrrichtung E erfolgt. Erkennbar ist dabei die mittig angeordnete Durchgangsöffnung 20b im Nabenbereich 20a des Tellerrades 20. Diese Durchgangsöffnung 20b ist dabei bereichsweise rotationssymmetrisch um die Längsachse y bzw. die Einfahrrichtung E, wobei diese Rotationssymmetrie durch den Durchbruch 20c unterbrochen wird. Der Durchbruch 20c ist dabei in der dargestellten Ausführungsform schlitzartig ausgeführt, wobei die beiden Flanken des Durchbruchs 20c parallel zueinander angeordnet sind und die Rotationssymmetrie der Durchgangsöffnung 20b zerstören bzw. den idealisierten Verlauf der Durchgangsöffnung 20b schneiden. Zur radialen Abstützung verfügt das Tellerrad 20 über einen Vorsprung 20e, welcher relativ zum Stützbereich 20g entgegen der Einfahrrichtung E hervorspringt. Der Vorsprung 20e weist dabei äußerlich eine kreisrunde Kontur auf, welche rotationssymmetrisch zu der Längsachse y ist. In einer alternativen Ausführungsform kann der Durchbruch 20c und dessen Flanken jedoch derart weit nach außen geführt sein, dass diese die äußere rotationssymmetrische Kontur bzw. Erscheinung des Vorsprungs 20e zerstören, sodass nur noch eine bereichsweise Rotationssymmetrie vorliegt und der Vorsprung 20e in zwei Vorsprünge durch den Durchbruch 20c zerteilt wird.

### Bezugszeichenliste

- 10: - Stütze
- 11: - Verbindungswelle
- 12: - Stützenaußenrohr
- 13: - Stützeninnenrohr
- 14: - Anschraubplatte
- 16: - Fuß
- 17: - Handkurbel
- 18: - Getriebebereich
- 19: - Tragplatte
- 19a: - Loch
- 20: - Tellerrad
- 20a: - Nabenbereich
- 20b: - Durchgangsöffnung
- 20c: - Durchbruch
- 20e: - Vorsprung
- 20f: - Verzahnung
- 20g: - Stützbereich
- 21: - Spindel
- 21a: - Spindelzapfen
- 22: - Ringspalt
- 23: - Trag- Mitnahmestift
- 24: - Tragscheibe
- 25: - Axiallager
- 26: - Druckscheibe
- 26a: - sphärisch Fläche
- 27: - Spindelmutter
- E: - Einfahrrichtung
- A: - Ausfahrrichtung
- R: - Radiale Richtung
- y: - Längsachse
- α: - Verlagerungswinkel

## Patentansprüche

1. Stütze, insbesondere für Sattelauflieger, wobei die Stütze ein Stützenaußenrohr (12) umfasst,
mit einer darin angeordneten Tragplatte (19) und einem entlang einer Längsachse (y) verstellbaren Stützeninnenrohr (13),
wobei das Stützinnenrohr (13) mit einer Spindelmutter (27) verbunden ist, die mit einem Gewindeteil einer Spindel (21) in Eingriff steht oder bringbar ist, wobei die Spindel (21) über einen Getriebebereich (18) antreibbar ist,
wobei der Getriebebereich (18) einen Kegelradsatz aufweist, welcher ein Tellerrad (20) umfasst, das einen Nabenbereich (20a) aufweist, wobei der Nabenbereich (20a) dazu ausgelegt ist, ein Drehmoment um die Längsachse (y) auf die Spindel (21) zu übertragen,
wobei die Spindel (21) durch ein Loch (19a) der Tragplatte (19) geführt ist, und durch die Tragplatte (19) gelagert ist, **dadurch gekennzeichnet, dass** die Lagerung der Spindel (21) in der Tragplatte (19) schwimmend ausgebildet ist.

2. Stütze gemäß Anspruch 1,
wobei der Nabenbereich (20a) einen Vorsprung (20e) aufweist, mittels welchem das Tellerrad (20) in dem Loch (19a) der Tragplatte (19) gelagert ist.

3. Stütze gemäß Anspruch 2,
wobei in dem Loch (19a) der Tragplatte (19) ein Gleitlager angeordnet ist, an welchem der Vorsprung (20e) abstützend anlegbar ist.

4. Stützte gemäß einem der vorhergehenden Ansprüche,
wobei der Nabenbereich (20a) eine Durchgangsöffnung (20b) aufweist, durch welche die Spindel (21) führbar ist.

5. Stütze gemäß Anspruch 4,
wobei das Ende der Spindel (21), welches durch die Durchgangsöffnung (20b) geführt ist, als ein Spindelzapfen (21a) ausgebildet ist, welcher einen anderen Durchmesser aufweist, als der Gewindeteil der Spindel (21).

6. Stütze gemäß Anspruch 5,
wobei zwischen der Durchgangsöffnung (20b) des Tellerrades (20) und dem Spindelzapfen (21a) ein Ringspalt (22) besteht.

7. Stütze gemäß einem der vorhergehenden Ansprüche,
wobei das Tellerrad (20) einen länglichen Durchbruch (20c) aufweist, der schlitzartig durch den Nabenbereich (20a) verläuft,
wobei die Flanken des Durchbruchs (20c) mit zumindest einem Übertragungsmittel (23) im Eingriff stehen oder bringbar sind, sodass ein antreibendes Drehmoment von dem Tellerrad (20) auf die Spindel (21) formschlüssig übertragbar ist.

8. Stütze gemäß Anspruch 7,
wobei das Übertragungsmittel (23) ein Trag- Mitnahmestift ist, welcher sich quer durch den Spindelzapfen (21a) erstreckt.

9. Stütze gemäß Anspruch 8,
wobei der Durchbruch (20c) den Nabenabschnitt (20a) vollständig durchdringt, sodass das Tellerrad (20) relativ zur Spindel in Richtung der Längsachse (y) verlagerbar ist.

10. Stütze gemäß einem der vorhergehenden Ansprüche,
wobei zwischen der Spindel (21) und der Tragplatte (19) ein Axiallager (25) angeordnet ist,
wobei das Axiallager (25) Kräfte von der Spindel (21), insbesondere in Richtung der Längsachse (y), mittel oder unmittelbar auf die Tragplatte (19) übertragen kann.

11. Stützte gemäß Anspruch 10,
wobei zwischen der Tragplatte (19) und dem Axiallager (25) eine Druckscheibe (26) angeordnet ist.

12. Stütze gemäß einem der vorhergehenden Ansprüche,
wobei eine zwischen der Tragplatte (19) und dem Axiallager (25) angeordnete Druckscheibe (26) eine konvexe Fläche (26a) aufweist, welche mit der Tragplatte (19) in Kontakt steht oder bringbar ist,
wobei die konvexe Fläche (26a) bevorzugt sphärisch ausgebildet ist.

13. Stütze gemäß einem der vorhergehenden Ansprüche,
wobei das Loch (19a) der Tragplatte (19) bereichsweise konisch aufgeweitet ausgebildet ist,
wobei der Durchmesser des konischen Bereichs zu einem Fuß (16) der Stütze hin zunimmt.

14. Stützte gemäß Ansprüche 12 und 13, wobei der konische Bereich das Loch (19a) dazu ausgelegt ist, mit der konvexen Fläche (26a) zu kontaktieren.

## Claims

1. Support, in particular for semi-trailers, wherein the support comprises an outer support tube (12),
having a support plate (19) arranged therein and an inner support tube (13) adjustable along a longitudinal axis (y),
wherein the support inner tube (13) is connected to a spindle nut (27) which engages or can be brought into engagement with a threaded portion of a spindle (21),
wherein the spindle (21) can be driven via a gear portion (18), wherein said gear portion (18) comprises a bevel gear set including a crown gear (20) having a hub portion (20a), said hub portion (20a) being adapted to transmit torque to said spindle (21) about said longitudinal axis (y),
wherein the spindle (21) is passed through a hole (19a) of the support plate (19), and is supported by the support plate (19)
**characterized in that** the bearing of the spindle (21) is designed to float in the support plate (19).

2. Support according to claim 1,
wherein the hub portion (20a) has a projection (20e) by means of which the crown wheel (20) is supported in the hole (19a) of the support plate (19).

3. Support according to claim 2,
wherein a slide bearing is arranged in the hole (19a) of the support plate (19), against which the projection (20e) can be supported.

4. Support according to any one of the preceding claims,
wherein the hub portion (20a) has a through-hole (20b) through which the spindle (21) can be guided.

5. Support according to claim 4,
wherein the end of the spindle (21) which is passed through the through-hole (20b) is formed as a spindle pin (21a) having a different diameter than the threaded portion of the spindle (21).

6. Support according to claim 5,
wherein an annular gap (22) exists between the through-hole (20b) of the crown wheel (20) and the spindle pin (21a).

7. Support according to any of the preceding claims,
wherein the crown wheel (20) has an elongated aperture (20c) which runs through the hub portion (20a) like a slot,
wherein the flanks of the aperture (20c) are in engagement or can be brought into engagement with at least one transmission means (23) such that a driving torque can be transmitted from the crown wheel (20) to the spindle (21) in a form-fit manner.

8. Support according to claim 7,
wherein the transmission means (23) is a carrier driving pin extending transversely through the spindle pin (21a).

9. Support according to claim 8,
wherein the aperture (20c) completely penetrates the hub portion (20a) such that the crown wheel (20) is displaceable relative to the spindle in the direction of the longitudinal axis (y).

10. Support according to any of the preceding claims,
wherein an axial bearing (25) is arranged between the spindle (21) and the support plate (19),
wherein the axial bearing (25) can transmit forces from the spindle (21), in particular in the direction of the longitudinal axis (y), indirectly or directly to the support plate (19).

11. Support according to claim 10,
wherein a thrust washer (26) is arranged between the support plate (19) and the axial bearing (25).

12. Support according to any of the preceding claims,
wherein a thrust washer (26) arranged between the support plate (19) and the axial bearing (25) has a convex surface (26a) which is in contact or can be brought into contact with the support plate (19),
wherein the convex surface (26a) is preferably spherical.

13. Support according to any of the foregoing claims,
wherein the hole (19a) of the support plate (19) is conically widened in areas,
wherein the diameter of the conical portion increases towards a base (16).

14. Support according to claims 12 and 13,
wherein the tapered portion of the hole (19a) is adapted to contact the convex surface (26a).

## Revendications

1. Support, en particulier pour semi-remorques, le support comportant un tube de support extérieur (12) avec un panneau porteur (19) disposé dans celui-ci, et un tube de support intérieur (13) déplaçable le long d'un axe longitudinal (y),
dans lequel
le tube de support intérieur (13) est relié à un écrou de broche (27) qui est ou peut être amené en engagement avec une partie filetée d'une broche (21),
la broche (21) peut être entraînée par une portion d'engrenage (18),
la portion d'engrenage (18) présente un jeu de pignons coniques comprenant une couronne dentée (20) présentant une portion de moyeu (20a),
la portion de moyeu (20a) est conçue pour transmettre un couple de rotation à la broche (21) autour de l'axe longitudinal (y),
la broche (21) est menée à travers un trou (19a) du panneau porteur (18) et est retenue par le panneau porteur (19),
**caractérisé en ce que**
le montage de la broche (21) dans le panneau porteur (19) est réalisé de façon flottante.

2. Support selon la revendication 1,
dans lequel
la portion de moyeu (20a) présente une saillie (20e) par laquelle la couronne dentée (20) est montée dans le trou (19a) du panneau porteur (19).

3. Support selon la revendication 2,
dans lequel
un palier coulissant est disposé dans le trou (19a) du panneau porteur (19), contre lequel la saillie (20e) peut venir en appui avec effet de soutien.

4. Support selon l'une des revendications précédentes,
dans lequel
la portion de moyeu (20a) présente une ouverture traversante (20b) permettant de guider la broche (21).

5. Support selon la revendication 4,
dans lequel
l'extrémité de la broche (21) guidée à travers l'ouverture traversante (20b) est réalisée sous forme de tige de broche (21a) qui présente un diamètre différent de celui de la partie filetée de la broche (21).

6. Support selon la revendication 5,
dans lequel
une fente annulaire (22) existe entre l'ouverture traversante (20b) de la couronne dentée (20) et la tige de broche (21a).

7. Support selon l'une des revendications précédentes,
dans lequel
la couronne dentée (20) présente une traversée oblongue (20c) qui s'étend en forme de fente à travers la portion de moyeu (20a),
les flancs de la traversée (20c) sont ou peuvent être amenés en engagement avec au moins un moyen de transmission (23), de sorte qu'un couple de rotation d'entraînement peut être transmis par coopération de forme depuis la couronne dentée (20) à la broche (21).

8. Support selon la revendication 7,
dans lequel
le moyen de transmission (23) est un tenon entraîneur porteur qui s'étend transversalement à travers la tige de broche (21a).

9. Support selon la revendication 8,
dans lequel
la traversée (20c) traverse complètement la portion de moyeu (20a), de sorte que la couronne dentée (20) est mobile par rapport à la broche en direction de l'axe longitudinal (y).

10. Support selon l'une des revendications précédentes,
dans lequel
un palier axial (25) est disposé entre la broche (21) et le panneau porteur (19),
le palier axial (25) peut transmettre des forces de la broche (21) soit directement soit indirectement au panneau porteur (19), en particulier en direction de l'axe longitudinal (y).

11. Support selon la revendication 10,
dans lequel
un disque de pression (26) est disposé entre le panneau porteur (19) et le palier axial (25).

12. Support selon l'une des revendications précédentes,
dans lequel
un disque de pression (26) disposé entre le panneau porteur (19) et le palier axial (25) présente une surface convexe (26a) qui est ou peut être amenée en contact avec le panneau porteur (10),
la surface convexe (26a) est réalisée de préférence de façon sphérique.

13. Support selon l'une des revendications précédentes,
dans lequel
le trou (19a) du panneau porteur (19) est localement évasé de façon conique, et le diamètre de la zone conique augmente vers un pied (16) du support.

14. Support selon les revendications 12 et 13,
dans lequel
la zone conique du trou (19a) est conçue pour venir en contact avec la surface convexe (26a).
